# EUROPEAN PATENT APPLICATION

(11) **EP 3 527 537 A1**
(43) Date of publication of application: **21.08.2019**
(21) Application number: 19156436.8
(22) Date of filing: 11.02.2019
(51) Int. Cl.: C02F 1/467, C02F 1/42

(54) **WATER SOFTENING APPARATUS**

(30) Priority: 15.02.2018 IT 201800002721
(71) Applicant: Culligan Italiana S.p.A., 40057 Granarolo dell'Emilia BO (IT)
(72) Inventor: NOVELLI, Giuseppe, 40057 GRANAROLO DELL'EMILIA BOLOGNA (IT); SCARANARI, Riccardo, 40060 DOZZA BOLOGNA (IT)
(74) Representative: Casadei, Barbara

(57) **Abstract**

Described is a water softening apparatus which comprises a container (2) for holding cationic or anionic resin, an inlet conduit (3) configured for introducing untreated water, or so-called hard water, into the resin container (2), preferably drawn from the water main, a outlet conduit (5) configured for introducing treated water, or so-called soft water, from the resin container (2); the apparatus (1) also comprises a vessel (7) for containing a brine solution (8), a conduit (16) for connecting the vessel (7) of the brine solution (8) with the resin container (2) and an electrical current generator (9) configured for defining with the brine solution (8) an electrolytic cell; the electric current generator (9) is positioned inside the vessel (7) of the brine solution (8) at a depth of the vessel (7) such that it is immersed, at least partly, in the brine solution (8) for triggering an electrolytic reaction after its activation.

## Description

This invention relates to a water softening apparatus.

More specifically, without limiting the invention, the water softening apparatus to which reference is made is a water treatment plant based on the ion exchange principle of comprising a container of cationic type resin.

In the specific case of cationic resin, the "hard" water, drawn from the water main, is introduced in the container and passes through the resins with which it instils a chemical ion exchange such that the calcium salts and the magnesium salts of the "hard" water are transformed into sodium salts, thereby making the water "soft".

The ion exchange process results in a progressive depletion of the exchange power of the resins, which makes it necessary to regenerate them with sodium chloride in an aqueous solution, also called "brine".

For this reason, the water softening apparatus comprises a vessel for containing a brine solution which is drawn, through a special conduit, and introduced into the resin container.

The resins, passed through by the brine solution, by means of an inverse process, are loaded with sodium and become operational again.

The provision of an electric current generator in water softening apparatuses is currently known for sanitizing during regeneration of the resins.

The electric current generator is positioned along the connecting conduit of the vessel containing the brine solution and the resin container, as described and illustrated in patent document US3627133.

The electric current generator comprises a cathode and an anode which are energised to trigger an electrolytic reaction of the brine solution and thus provide the chlorine gas.

The activation of the electric current generator is of the "trigger" type, that is to say, when the sensor located in the cell detects a water conductivity greater than a predetermined threshold, the generator is activated for a predetermined length of time producing chlorine in order to eliminate the bacterial load in the water softener.

In this way, the brine solution is used as a source of chlorine per sanitizing and disinfecting the container and the ion exchanging resins during the regeneration operation.

Current national regulations in various countries require that the treated water at the outlet from the water softening apparatuses have a bacterial load which is not substantially different from the water to be treated, drawn from the water main.

Therefore, in order to market water softening apparatuses which comply with the current regulations in the country of sale, the Applicant has carried out laboratory test campaigns to check whether the prior art solution, currently used, guarantees compliance with the regulations in terms of bacterial load of the water treated.

The tests performed have shown that the prior art solution, wherein the electric current generator is positioned along the connecting conduit of the vessel containing the brine solution and the resin container, does not guarantees an effective sanitizing of the soft water with the passage of time.

In this context, the need is felt to provide a water softening apparatus comprising an automatic sanitizing system which not only complies with the legal requirements at the time of installation but which guarantees an effective sanitizing for the entire duration of the service life of the plant, which undergoes regular maintenance. The softening apparatus comprises a container of cationic or anionic resins, an inlet conduit configured to introduce untreated water, or so-called "hard water", into the resin container, preferably drawn from the water main, and an outlet conduit configured for introducing treated water, or so-called "soft water", from the resin container.

The apparatus also comprises a vessel for containing a brine solution, a conduit for connecting the vessel of the brine solution with the resin container and an electric current generator configured to define with the brine solution an electrolytic cell.

The electric current generator is positioned inside the vessel of the brine solution to a depth of the vessel such that it is immersed, at least partly, in the brine solution for triggering an electrolytic reaction after its activation.

Advantageously, the positioning of the electric current generator in the vessel of the brine solution allows an electrolysis to be performed whose effects on the sanitizing of the resin container are in line with the current regulations on bacterial load.

Indeed, unlike the prior art, the electrolysis inside the vessel has a greater effect in terms of generation of chlorine, compared with the prior art electrolysis which occurs during the passage of the flow of brine solution in the connecting conduit with the resin container along which the generator is positioned.

Further features and advantages of this invention are more apparent in the detailed description below, with reference to some preferred, non-limiting, embodiments of a water softening apparatus as illustrated in the accompanying drawings, in which:
- Figure 1 is a schematic perspective view of a water softening apparatus according to the invention;
- Figure 2 is a scaled-up view of a detail of the water softening apparatus of Figure 1;
- Figure 3 illustrates an alternative embodiment of the apparatus of Figure 1.
- Figure 4 is a scaled-up view of a detail of Figure 3.

The numeral 1 denotes a water softening apparatus according to the invention.

The water softening apparatus 1 comprises a container (2) for cationic resin.

Preferably, the cationic resins are of the so-called strong type.

The water softening apparatus 1 comprises an inlet conduit 3 of the untreated water, or so-called "hard water", in the resin container 2.

The untreated water 4 is generally drawn from the water main.

The water softening apparatus 1 comprises an outlet conduit 5 of the treated water, or so-called "soft water", from the resin container 2.

If the resins of the container 2 are of the cationic type, they capture the positive ions Ca⁺⁺ and Mg⁺⁺ and replace them with Na⁺ ions. The treated water is therefore enriched with sodium ions with respect to the untreated water.

Similarly, if the resins of the container 2 are of the anionic type, the anionic resins exchange negative ions, for example replacing the nitrate ion with the chloride ion. The treated water therefore has a greater concentration of the anions initially present on the resin.

The water softening apparatus 1 comprises a vessel 7 for containing a brine solution 8 and a connecting conduit 16 of the vessel 7 of the brine solution 8 and the resin container 2, through which the brine solution 8 is drawn from the vessel 7 and introduced in the resin container 2.

The vessel 7 for containing the brine solution 8 has inside a separating body 17 configured for allowing the drawing of the brine solution 8, preventing interference of pieces of salt contained in the vessel.

The separating body 17 has a respective side wall 18.

The side wall 18 defines a dividing wall in the vessel 7.

The separating body 17 is a hollow body.

More specifically, the separating body 17 is in the form of a hollow cylindrical element.

The water softening apparatus 1 comprises an electrical current generator 9 configured for being connected to a source of electricity, not illustrated, and defining with the brine solution 8 an electrolytic cell.

According to the invention, the electric current generator 9 is positioned inside the vessel 7 of the brine solution 8, at a distance defined from the bottom of the vessel 7, such that it is immersed in the brine solution 8 for triggering an electrolytic reaction, after its activation.

It should be noted that the distance from the bottom of the vessel 7 at which the electric current generator 9 is positioned takes into consideration the height of the layer of muddy material which is notoriously deposited on the bottom of the vessel 7.

In other words, the electric current generator 9 is located at a predetermined depth of the vessel 7, on top of the muddy layer.

More specifically, the electric current generator 9 is positioned in the separating body 17, where the brine solution 8 is drawn from the vessel 7.

In this way, the electric current generator 9 does not interfere with the pieces of salt present in the vessel 7.

The water softening apparatus 1 comprises a control unit 10 configured for electrically activating the electric current generator 9.

In other words, the control unit 10 acts on a switch for closing and opening the electrical circuit connecting the electric current generator 9 to the source of electricity.

With the activation of the electric current generator 9, the control unit 10 acts on the switch for closing the electrical circuit connecting the electric current generator 9 to the source of electricity.

More specifically, the control unit 10 is configured to activate the electric current generator 9 according to defined time intervals.

The control unit 10 is configured to deactivate the electric current generator 9 after a defined activation time.

With the deactivation of the electric current generator 9, the control unit 10 acts on the switch for closing the electrical circuit connecting the electric current generator 9 to the source of electricity.

The activation time is a function of the volume of resins contained in the container 2.

The activation time of the electric current generator 9 increases with the increase of the volume of resins contained in the container 2.

The control unit 10 is configured to be programmed by an operator.

By way of example, considering a volume of resins of 10 litres, the electric current generator 9 is activated by the control unit 10 for 2 minutes, for a period of time of 4 hours.

The electric current generator 9 comprises a sealed body 11 for housing a pair of electrodes 12 which extend, at least partly, outside the body 11 to define a cathode element 13 and an anode element 14 of the electrolytic cell.

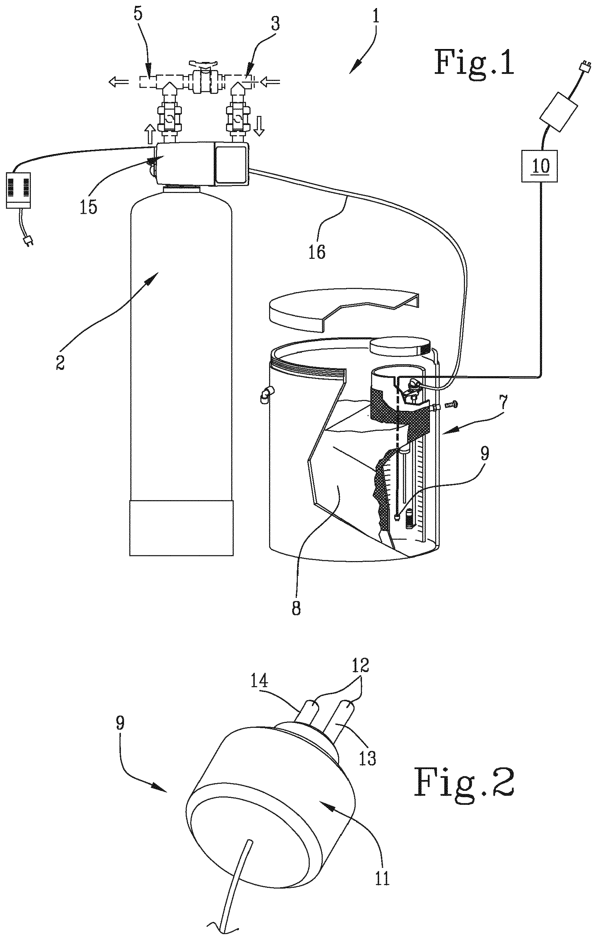

According to the preferred embodiment illustrated of Figure 1, the body 11 of the electric current generator 9 is inserted by gravity into the vessel 7, in particular into the separating body 17, and located at a depth such that it is completely immersed in the brine solution 8.

In other words, the electric power generator 9 is lowered inside the vessel 7 in a vertical direction relative to the bottom of the vessel 7 and locked at the desired depth.

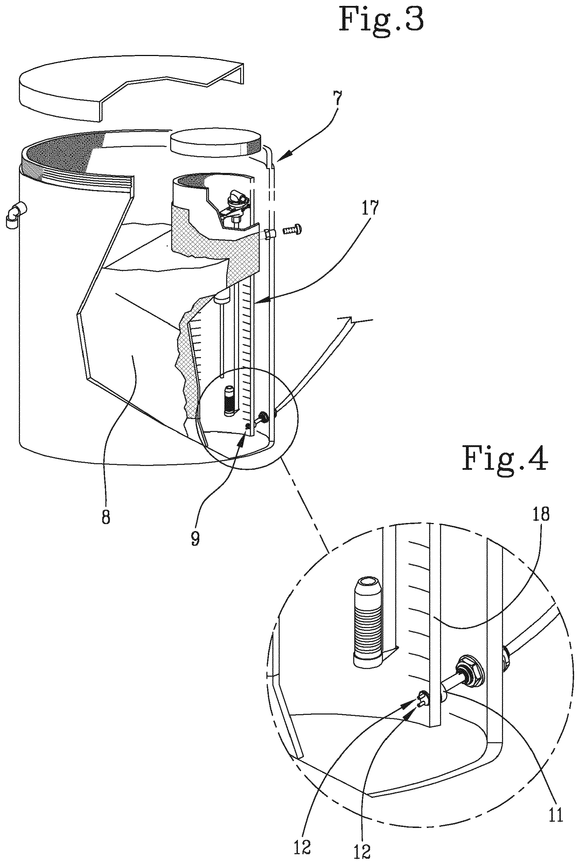

Alternatively, according to Figure 3, the electric current generator 9 is inserted inside the vessel 7 through the lateral wall of the vessel through a watertight passage hole.

According to this variant, the electrodes 12 of the electric current generator 9 extend inside the separating body 17.

The body 11 for housing the electrodes 12 is positioned at least partly in the side wall 18 of the separating body 17, as illustrated in Figure 4.

Also for this variant embodiment, the positioning of the electric current generator 9 into the vessel 7 is such that the electrodes 12 are immersed in the brine solution 8.

Each electrode 12 is configured to be activated electrically.

In this sense, the control unit 10 is configured to activate electrically the electrodes 12 of the electric current generator 9.

The water softening apparatus 1, as is known, comprises a control panel 15, designed to be programmed by an operator, by means of which the activation of a step for regenerating the resins is set up.

Preferably, the control unit 10 of the electric current generator 9 has a relative electrical connection to a source of electricity.

Preferably, the electrical connection of the control unit 10 is independent of the electrical connection of the control panel 15.

In other words, the control unit 10 of the electric power generator 9 is physically separate from the control panel 15 of the water softening apparatus 1.

Alternatively, the control unit 10 of the electric power generator 9 is part of the control panel 15 of the water softening apparatus 1.

The step for regenerating the resins comprises, by means of the connecting conduit 16, at least the drawing of a predetermined volume of brine solution 8 from the vessel 7 and the introduction of this volume in the resin container 2.

The volume of brine solution 8, drawn for regenerating the resins, is sanitized by means of electrolysis whilst it is in the vessel 7, before being drawn to be inserted in the resin container 2.

Moreover, with reference to the same volume of brine contained in the vessel 7, the electrolysis is repeated several times and, for each time, for a predetermined time interval, as a function of the programming of the current generator 9.

Since the electrolysis of a predetermined volume of brine solution 8 occurs during its time in the vessel 7, advantageously the electrolysis guarantees sufficient formation of chlorine which allows the sanitizing of the resins during the regenerating step, guaranteeing that the treated water, or 'soft water', has a bacterial load similar to or less than that of the untreated water, or 'hard water', drawn from the water main.

It should be noted that in the prior art the electrolysis of the brine solution, drawn from the vessel, occurs during the passage of the volume drawn along the connecting conduit of the brine solution vessel with the resin container.

### Example 1

For the tests use has been made of three apparatuses according to the invention, each equipped with a resin container 2 with a volume of 10 litres.

Before being used in the tests, the apparatus of the example 2A, without a system for sanitizing the resins, was connected to the water main and 1000 litres of water per day were supplied for 18 weeks. At the end of the 18 weeks of supply, the brine was topped up and an electrolytic cell was installed according to the layout shown in Figure 1.

The plants were connected in parallel to an inlet of the municipal water main. A mechanical filter with wound wire was located upstream of the apparatuses.

A fourth apparatus without a system for sanitizing the resins was also connected in parallel to the water main and used as a reference control.

A sample of water at the inlet was drawn upstream of the mechanical filter.

The electrolytic cells were activated as follows:

| | Frequency of activation | Duration of activation |
|---|---|---|
| Example 2A | 4 hours | 2 minutes |
| Example 2B | 4 hours | 8 minutes |
| Example 2C | 4 hours | 20 minutes |

1000 litres of water have been dispensed once a day by each apparatus.

After the third dispensing, 6 litres of water have been dispensed by each apparatus, on which the total bacterial load has been determined.

The sampling was repeated each week for 6 weeks. The dispensing of the water was suspended for 6 weeks between week 4 and week 5. During these weeks of suspension the electrolytic cells continued to operate as described above. At the end of the suspension period the daily dispensing of the water was resumed, as well as the drawing of the test samples.

During the tests the plants were regularly supplied with salt, as required by the quantity of water dispensed daily.

The microbiological analyses at 22°C and at 37°C were carried out as specified in "Metodi analitici di riferimento per le acque destinate al consumo umano ai sensi del DL.vo 31/2011, metodi microbiologici - rapporti ISTISAN 07/05. ISS A 001 rev. 00, A 004 A, 006 A." *("Analytical reference methods for water for human consumption in accordance with Italian Legislative Decree 31*/*2011, microbiological methods* - *reports ISTISAN 07*/*05. ISS rev. 00 001 A, A 004 A, 006 A.')* The following table shows the results of the tests.

| | | **CFU** | |
|---|---|---|---|
| **Week** | **Sample** | **22°C** | **37°C** |
| 1 | Ex. 2A | 684 | 556 |
| | Ex. 2B | 21 | 9 |
| | Ex. 2C | 13 | 5 |
| | Control | 43 | 32 |
| | Inlet | 0 | 0 |
| 2 | Ex. 2A | 676 | 508 |
| | Ex. 2B | 26 | 7 |
| | Ex. 2C | 14 | 13 |
| | Control | 122 | 41 |
| | Inlet | 0 | 1 |
| 3 | Ex. 2A | 1344 | 1004 |
| | Ex. 2B | 41 | 35 |
| | Ex. 2C | 48 | 21 |
| | Control | 106 | 44 |
| | Inlet | 0 | 0 |
| 4 | Ex. 2A | 147 | 52 |
| | Ex. 2B | 50 | 19 |
| | Ex. 2C | 12 | 44 |
| | Control | 99 | 34 |
| | Inlet | 0 | 1 |
| 11 | Ex. 2A | 61 | 46 |
| | Ex. 2B | 49 | 6 |
| | Ex. 2C | 26 | 7 |
| | Control | 372 | 97 |
| | Inlet | 1 | 2 |
| 12 | Ex. 2A | 131 | 155 |
| | Ex. 2B | 10 | 15 |
| | Ex. 2C | 12 | 11 |
| | Control | 108 | 36 |
| | Inlet | 1 | 0 |

In the first analysis of the content of microorganisms, the samples of the apparatuses of examples 2B and 2C showed a reduction in the bacterial count relative to the control sample, both at 22°C and at 37°C.

The apparatuses of the examples 2B and 2C maintained the microorganisms count below the 2log threshold with respect to the water sample at the inlet for the entire tests.

The apparatus of the example 2A was initially more polluted. The trend of the bacterial count in the water coming from the apparatus of example 2A was decreasing.

## Claims

1. A water softening apparatus, comprising
a container (2) for cationic resin;
an inlet conduit (3) configured for introducing untreated water, or so-called hard water, in the resin container (2), preferably drawn from the water main;
an outlet conduit (5) configured for introducing treated water, or so-called soft water, from the resin container (2);
a vessel (7) for containing a brine solution (8);
a conduit (16) for connecting the vessel (7) of the brine solution (8) with the resin container (2);
an electrical current generator (9) configured for defining with the brine solution (8) an electrolytic cell;
**characterised in that**
the electric current generator (9) is positioned inside the vessel (7) of the brine solution (8) to a depth of the vessel (7) such that it is immersed, at least partly, in the brine solution (8) for triggering an electrolytic reaction after its activation.

2. The apparatus according to claim 1, **characterised in that** it comprises a control unit (10) configured for electrically activating the electric current generator (9) according to predetermined time intervals.

3. The apparatus according to claim 1 or 2, **characterised in that** it comprises a control unit (10) configured for electrically activating and deactivating the electric current generator (9) according to a predetermined operational time interval.

4. The apparatus according to claim 3, **characterised in that** the operational time interval of the electric current generator (9) is a function of the volume of resins contained in the container (2).

5. The apparatus according to claim 4, **characterised in that** the operational time interval of the electric current generator (9) increases with the increase of the volume of resins contained in the container (2).

6. The apparatus according to any one of claims 3 to 5, **characterised in that** the control unit (10) has an electric connection to a source of electricity and is configured to be programmed by an operator.

7. The apparatus according to any one of the preceding claims, **characterised in that** the electric current generator (9) comprises at least one pair of electrodes (12), defining a cathode element (13) and an anode element (14) of the electrolytic cell and a sealed body (11) for housing the pair of electrodes (12) which extend, at least partly, outside the body (11).

8. The apparatus according to claim 7, **characterised in that** the vessel (7) for containing the brine solution (8) has inside a separating body (17) configured for allowing the drawing of the brine solution (8); the electrodes (12) of the electric current generator (9) being positioned in the separating body (17).

9. The apparatus according to claim 8, **characterised in that** the body (11) of the electric current generator (9) is positioned inside the separating body (17).

10. The apparatus according to claim 8, **characterised in that** the body (11) of the electric power generator (9) is positioned at least partly in the wall (18) of the separating body (17); the electrodes (12) extending from the wall (18) towards the inside of the separating body (18).

11. A method for sanitising a water softening apparatus according to any one of claims 1 to 10, comprising a step of regenerating the resins contained in the container (2) during which a predetermined volume of brine solution (8) contained in the vessel (7) is drawn and introduced into the container (2) through the connecting conduit (16), **characterised in that** it comprises at least a step of electrolysis of the volume of brine solution (8) contained in the vessel (7), this step occurring during the time the volume is in the vessel (7) before being introduced in the resin container (2) during the step of regenerating the resins.

12. The sanitising method according to claim 11, **characterised in that**, with reference to the same volume of brine contained in the vessel (7), the step of electrolysis of the volume of brine solution (8) is repeated several times and, for each time, for a predetermined time interval.
